# EUROPEAN PATENT SPECIFICATION

(11) **EP 1 341 350 B1**
(45) Date of publication and mention of the grant of the patent: **26.04.2006**
(21) Application number: 02003558.0
(22) Date of filing: 15.02.2002
(51) Int. Cl.: H04L 12/56

(54) **A method for congestion detection for IP flows over a wireless network**
Verfahren zur Überlastdetektion von IP-Flows über ein drahtloses Netzwerk
Procédé pour la détection de la congestion de flux IP sur un réseau sans fils

(43) Date of publication of application: 03.09.2003
(73) Proprietor: Sony Deutschland GmbH, 10785 Berlin (DE)
(72) Inventor: Röhrle, Klaus, Advanced Tech. Center Stuttgart, Heinrich-Hertz-Str. 1, 70327 Stuttgart (DE); Bosau, Detlef, 70565 Stuttgart (DE)
(74) Representative: Rupp, Christian

(56) References cited:
- AJAY BAKRE ET AL: "I-TCP: INDIRECT TCP FOR MOBILE HOSTS" PROCEEDINGS OF THE INTERNATIONAL CONFERENCE ON DISTRIBUTED COMPUTING SYSTEMS. VANCOUVER, MAY 30 - JUNE 2, 1995, LOS ALAMITOS, IEEE COMP. SOC. PRESS, US, vol. CONF. 15, 30 May 1995 (1995-05-30), pages 136-143, XP000530804 ISBN: 0-7803-2963-5
- ALLMAN M ET AL: "ON ESTIMATING END-TO-END NETWORK PATH PROPERTIES" COMPUTER COMMUNICATIONS REVIEW, ASSOCIATION FOR COMPUTING MACHINERY. NEW YORK, US, October 1999 (1999-10), pages 263-274, XP000852204 ISSN: 0146-4833
- WANG H ET AL: "PERFORMANCE ANALYSIS OF MULTICAST FLOW CONTROL ALGORITHMS OVER COMBINED WIRED/WIRELESS NETWORKS" IEEE JOURNAL ON SELECTED AREAS IN COMMUNICATIONS, IEEE INC. NEW YORK, US, vol. 15, no. 7, 1 September 1997 (1997-09-01), pages 1349-1363, XP000721269 ISSN: 0733-8716
- BYUNG-GON CHUN ET AL: "Auxiliary timeout and selective packet discard schemes to improve TCP performance in PCN environment" COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, 8 June 1997 (1997-06-08), pages 381-385, XP010227150 ISBN: 0-7803-3925-8

## Description

### FIELD AND BACKGROUND OF THE INVENTION

The underlying invention generally relates to the field of mobile computing and/or communication in a heterogeneous network environment with distributed multimedia applications and technologies for high-speed data transfer. More specifically, the invention is directed to the field of Quality-of-Service (QoS) management for adaptive real-time (RT) services running on mobile terminals that support different access technologies for dynamic wire-bound and wireless networks based f.e. on the Transmission Control Protocol (TCP), the Internet Protocol (IP), the Real-Time Transport Protocol (RTP), and/or the User Datagram Protocol (UDP), respectively. In particular, it includes research and development issues which pertain to a method for congestion detection and network management in dynamic communication scenarios targeting to support distributed multimedia applications and services to dynamically adapt to a varying resource availability.

QoS management is a critical issue for the future multiple-serviced Internet. Thereby, an important aspect is how to effectively control network congestions. Presently, new mechanisms beyond end-to-end control are explored to support the evolution of network services. In this connection, the combination of node-to-node control and network-state-dependent packet scheduling is a promising approach.

To date, end-to-end congestion detection and control has been the dominant approach for congestion management in Wide Area Networks (WANs). It views the network as a "black box", and the end systems of said network determine the state of congestion by probing packet loss. For this reason, this approach mainly depends on the host mechanism and puts all complexity on network side, which is appropriate for pure best-effort data that have little or no sensitivity to delay or loss of individual packets.

The increasing popularity of the Internet and the projected growth of multimedia applications has created a number of urgent challenges for network designers and engineers. One of these challenges is congestion management, which includes congestion detection, control and avoidance mechanisms in connectionless and packet-switched dynamic WANs with high-speed access such as the Internet. In view of its best-effort nature, the Internet does not offer any QoS guarantees or support to multimedia applications such as Internet telephony and video conferencing. Consequently, the performance of all these applications may seriously be impaired by network congestion.

In general, network congestion in wire-bound WANs is affected by the following factors:
- the amount of network traffic generated by the users of said network,
- the underlying network architecture in terms of its links, their connectivity, and the characteristics of each link,
- the operating parameters of sources, routers and destinations within said network (e.g. number and size of the available buffers, the available processing power, specific system design parameters, etc.),
- flow control mechanisms used in the transport layers of the involved media sources and their respective destinations,
- congestion avoidance and congestion recovery schemes in routers and media sources,
- packet admission mechanisms in the network and link layers of media sources and destinations, and
- packet discarding and packet loss mechanisms in routers and destinations.

If one or more network components have to discard packets due to lack of buffer space, a media source in the network can not reserve bandwidth across the network to its destination. Therefore, it is unable to determine what data rate can be sustained between it and the destination.

In case a media source transmits data at a rate which is too high to be sustained between it and the destination, one or more routers will begin to queue the packets in their buffers. If the queuing continues, the buffers will become full and packets from the source will be discarded, which causes data loss. If the source attempts to guarantee transmission reliability, retransmission of data and increased transmission time between the source and the destination is the result.

As the load (the rate of transmitted data) through the network increases, the throughput (the rate of data reaching the destination) increases linearly. However, when the load reaches the network's capacity, the buffers in the routers begin to fill. This increases the response time (the time for said data to traverse the network between the source and the destination) and lowers the throughput. Once the buffers of said routers begin to overflow, packet loss occurs. Increases in load beyond this point increase the probability of packet loss. Under extreme load, response time approaches infinity and the throughput approaches zero; this is the point of congestion collapse due to the extreme drop in throughput.

In general, a large buffer space does not help to solve the problem of network congestion; this only postpones the inevitable packet loss when network load is larger than network capacity. Slow links by themselves do not cause congestion, but the mismatch of network link speeds helps cause congestion. Similarly, slow processors do not cause congestion. For example, the introduction of a high-speed processor in an existing network may actually increase the mismatch of processing speeds and the chances of congestion. In fact, congestion occurs even if all links and processors work with the same speed.

When a congestion control scheme is applied, it should be able to meet the following requirements:
- The congestion control scheme should have a low overhead.
- Moreover, it should be "fair". In this connection, defining "fairness" is not trivial, and there is no definition which is commonly accepted.
- Besides, said congestion control scheme should be responsive to available network capacity and user demands.
- Furthermore, the congestion control scheme must be able to work in the reduced environment of congestion, which may additionally be impaired by effects like transmission errors, out-of-sequence packets, and lost packets.
- Finally, said congestion control scheme must be "socially optimal", which means that it must allow the total network performance to be maximized.

Designing a congestion control scheme that meets all of these requirements is not a trivial issue.

In high-speed networks offering connections with large delay-bandwidth products, gateways are often designed with large maximum queues to accommodate transient congestion. For the Internet, the TCP detects congestions only after a packet has been dropped at the gateway. However, it would clearly be undesirable to have large queues (possibly on the order of a delay-bandwidth product) that were full most of the time; this would significantly increase the average delay in the network. Therefore, in high-speed networks it is increasingly important to have mechanisms that are able to simultaneously keep throughput high and average queue sizes low.

In absence of an explicit feedback from the gateway, there are a number of mechanisms that have been proposed for transport-layer protocols to maintain high throughput and low delay in the network. Some of said mechanisms are designed to work with current gateways, while other mechanisms are coupled with gateway scheduling algorithms that require per-connection state in the gateway. Furthermore, transport-layer protocols could infer congestion from the estimated bottleneck service time, from changes in throughput, from changes in end-to-end delay, as well as from packet drops or other methods. Nevertheless, the view of an individual connection is limited by the time scales of the connection, the traffic pattern of the connection, the lack of knowledge of the number of congested gateways, the possibilities of routing changes, as well as by other difficulties in distinguishing propagation delay from persistent queuing delay.

The most effective congestion detection can be performed in the gateway itself. The gateway can reliably distinguish between propagation delay and persistent queuing delay, and it has a unified view of the queuing behavior over time. In addition, a gateway is shared by many active connections with a wide range of round-trip times, tolerances of delay, throughput requirements, etc.; decisions about the duration and magnitude of transient congestion to be allowed at the gateway are best made by the gateway itself. The method of monitoring the average queue size at the gateway and of notifying connections of incipient congestion is based on the assumption that it is useful to have queues at the gateway where traffic from a number of connections is multiplexed together by means of a First-In-First-Out (FIFO) scheduling. FIFO scheduling is not only useful for sharing delay among connections, reducing delay for a particular connection during its periods of burstiness, but it also scales well and is easy to implement efficiently.

If an IP stream traverses wire-bound and wireless networks, congestion detection and control of said IP stream is always difficult because presently available congestion detection mechanisms are based on measurements of packet loss detected by time-outs. Unfortunately, this is not feasible for wireless networks, because some of them (e.g. the General Packet Radio Service, GPRS) involve high packet loss and varying latencies without being actually congested.

### BRIEF DESCRIPTION OF THE PRESENT STATE OF THE ART

According to the state of the art, a plurality of methods and technologies concerning the detection of network congestions in heterogeneous networks is currently available, which are closely related to the topic of the underlying invention. In order to understand the context of the invention, it is necessary to briefly explain the main features involved with said technologies.

A large part of emerging multimedia applications offering continuous media streams (e.g. audio and video) that are currently used in the Internet are based on UDP as a transport protocol. However, UDP offers no QoS control mechanisms and can therefore not guarantee any level of QoS. For this reason, said multimedia applications do not respond to notifications of congestion from the underlying network. Hence, these applications may severely overload the underlying network and starve other applications. Fluctuations of network conditions combined with the inability of TCP and UDP to support QoS control often render multimedia applications useless. In addition, deploying non-congestion-controlled UDP traffic results in extreme unfairness towards competing TCP traffic. Sending best-effort traffic without any consideration of the network congestion state can easily result in packet losses. In response to that, TCP connections, which constitute around 95 % of the Internet traffic today, would reduce their transmission rates. However, without any rate reduction on behalf of the non-congestion-controlled traffic, the TCP connections would starve and receive much less than their fair bandwidth shares. Therefore, UDP sources need to be enhanced with congestion control schemes that do not only aim at reducing loss ratios and improve bandwidth utilization but are also fair towards competing TCP connections ("TCP-friendly").

Currently, different approaches are being discussed for solving QoS and congestion control problems such as resource reservation, priority mechanisms and application control, i.e. to instruct the applications at the end systems to adapt the bandwidth share they are utilizing to the network congestion state. Reserving enough resources for supporting a certain QoS level in advance guarantees this QoS level and would be the most straightforward approach for handling the problem. However, as it is usually impossible to know the exact characteristics of a media stream in advance, one would tend to over-allocate resources to guarantee the requested QoS level, leading to network underutilization. In addition to the complexity and scalability problems of reservation-based QoS control schemes, these schemes do not easily allow the use of extra bandwidth, e.g. for improved quality during network underload states.

With priority mechanisms, different data packets or streams are labeled with different priorities and thereby treated differently at the network routers. Such an approach is simpler than the reservation approach as it requires no signaling and less complicated control mechanisms at the routers. However, the exact mechanisms for setting the priority levels, the router mechanisms for controlling these levels, and the actual gain achieved with such an approach are still under discussion.

An important gateway mechanism for congestion control according to the state of the art is packet scheduling. It can determine the way in which different flows interact with each other, and thus affect the collective traffic behaviors in the router. It allocates three quantities for a flow, bandwidth, promptness, and buffer space. In a multiple service environment, it can guarantee fairness and transmission rate for a particular flow. Owing to the advantages of packet scheduling, it has been implemented in cutting-edge IP routers of many providers. Based on both the theoretical and practical research on packet scheduling, it can be made adaptive to network state. At an,instant it may allocate more bandwidth to a flow to be congested than its share while limiting bandwidth shares of flows not to be congested. In this way, loss of packets can be reduced and network utility and performance can be improved. Because the packet scheduler monitors and controls flows directly, it is able to exploit the packet level utility further. Close coordination among routers and between the router and the host can also enhance congestion control. If downstream links notify upstream packet schedulers of the congestion status, traffic behaviors of flows can be better controlled. The packet scheduler can also do smart marking on packets according to different policies so as to inform the sources to adjust sending rates in a network-dependent fashion. This close coordination between the network and the sources can optimize bandwidth sharing among flows dynamically. Meanwhile, it can limit the amount of traffic entering the network in time efficiently.

Pricing has a twofold effect on congestion control. To the host, it provides an incentive for users to limit their usage of the network resource and adapt their applications to network congestion. In principle, this,can limit the amount of traffic of a flow entering the network and thus help control congestion. To the network, a price-driven scheduling can lead to a more efficient use of scarce resources (bandwidth). It can be assumed that the willingness of payment reflects certain aspects of the quality requirement of a user for its applications. Users who are willing to pay more should get better service at congestion. The pricing adds a new and important dimension for resource allocation and fairness guarantee.

The following technologies are closely related to the herewith presented topic of the underlying invention:
- Measurement of inter-arrival times and jitter observation: In the article "Estimating the Available Bandwidth for Real-Time Traffic over Best-Effort Networks" (in: W. Dabbous and C. Diot (editors), "Proceedings of the 5^{th} Workshop on Protocols for High-Speed Networks", Sophia Antipolis, France, 1996, Chapman & Hall, pp. 3-12) by F. Davoli (Univ. of Genoa), O. Khan, and P. Maryni, and "Load Estimation and Control in Best-Effort Network Domains" (Journal of Network and Systems Management, to appear) by P. Maryni and F. Davoli, different methods for a detection of network congestion in best-effort networks based on measurements of inter-arrival times are described.
- Application of TCP-compatible, Additive-Increase and Multiplicative-Decrease (AIMD) congestion control mechanisms: In "Adaptive Playout Mechanisms for Packetized Audio Applications in Wide-Area Networks" (in: Proceedings of the Conference on Computer Communications (IEEE Infocom), pp. 680-688, Toronto, Canada, June 1994) by R. Ramjee, J. Kurose, D. Towsley, and H. Schulzrinne, and "The Loss-Delay Adjustment Algorithm: A TCP-Friendly Adaptation Scheme" (in: Proc. of NOSSDAV, Cambridge, UK, 1998) by D. Sisalem and H. Schulzrinne (Columbia University), traffic rate control schemes are extensively discussed. Thereby, H. Schulzrinne is a prominent author, who is especially concerned with RTP and multimedia streaming.
- Mobile Transmission Control Protocol (MTCP): In the article "Improving End-to-End Performance of TCP over Mobile Internetworks" (in: Proceedings of the IEEE 1994 Workshop on Mobile Computing Systems and Applications, Santa Cruz, California, USA, 1994) by R. Yavatkar (Intel) and N. Bhagawat, the Multicast Transmission Control Protocol (MTCP) - an algorithm providing a scalable TCP-friendly congestion control for reliable multicast - is described, which modifies the acknowledge (ACK) mechanism in the Transmission Control Protocol (TCP) to avoid faulty loss detection due to extreme delays.
- Migratory Transmission Control Protocol (M-TCP) and Migratory Real-Time Protocol (M-RTP): In "Extensions to RTP to Support Mobile Networking" (in: Proceedings of the Third International Symposium on Multi-Dimensional Mobile Communications (MDMC'98), 1998) by K. Brown and S. Singh (Portland State University), M-TCP is described, which achieves a similar object like MTCP but with a different mechanism that keeps the original semantic of ACK packets. M-RTP, which is described in "M-TCP: TCP for Mobile Cellular Networks" (in: ACM Computer Communication Review, Vol. 27(5), 1997) by K. Brown and S. Singh, discusses the semantics of Real-Time Control Protocol (RTCP) reports and stream adaptations appropriate for mobile networks. Thereby, the focus is on the reaction upon bandwidth limitations, not on detecting them.
- Indirect Transmission Control Protocol (I-TCP): In "I-TCP: Indirect TCP for Mobile Hosts" (in: Proceedings of the 15^{th} International Converence on Distributed Computing Systems, pp. 136-1431, Vancouver, Canada, 1995) by A. Bakre and B. R. Badrinath, I-TCP is described, which introduces a flow relay scheme to separate wire-bound and wireless parts in a network path.

A comparison to related works according to the state of the art can be taken from Table 1.

A well-known example for congestion detection and avoidance in packet-switched networks according to the state of the art is the Random Early Detection (RED) algorithm, which is performed by means of RED gateways designed to accompany transport layer congestion control protocols such as TCP. Thereby, a RED gateway notifies connections of congestion either by dropping packets that arrive at the RED gateway or by setting a bit in the packet headers. It detects incipient congestion by computing the average queue size *q̅*. For this purpose, a low-pass filter with an exponential weighted moving average is used. Then, *q̅* is compared with two preset thresholds, a minimum threshold *q*ₘᵢₙ and a maximum threshold *q*ₘₐₓ. If *q̅* is less than *q*ₘᵢₙ, no packets are marked; if *q̅* is greater than *q*ₘₐₓ, each arriving packet is marked. However, if the average queue size *q̅* is between *q*ₘᵢₙ and *q*ₘₐₓ, each arriving packet *i* is marked with a probability *P*_{*i*}, which is a function of the average queue size *q̅*.

Whereas the RED algorithm mentioned above is designed to keep the average queue size *q̅* low while simultaneously allowing occasional bursts of packets in the queue, DECbit gateways set the congestion indication bit in each arriving packet if the average queue size exceeds a preset threshold.

In the paper "On Estimating End-to-End Network Path Properties", Allman M. et al consider two basic transport estimation problems: determining the setting of the retransmission timer for a reliable protocol, and estimating the bandwidth available to a connection as it begins. They look at both of these problems in the context of TCP, using a large TCP measurement set for trace-driven simulations. For retransmission timer estimation, they evaluate a number of different algorithms, finding that the performance of the estimators is dominated by their minimum values, and to a lesser extent, the timer granularity, while being virtually unaffected by how often round-trip time measurement are made or the settings of the parameters in the exponentially-weighted moving average estimators commonly used.

### PROBLEMS TO BE SOLVED BY THE INVENTION

Conventional mechanisms according to the state of the art which provided an end to end congestion detection and control do encounter the problem that they have to infer network congestion from indirect evidence such as packet loss and round-trip delay increases. In many cases, these inferences are wrong and packets are lost. Mechanisms which feed congestion information from routers back to traffic sources seem to work more effectively than sheer end-to-end mechanisms. Thus, TCP congestion avoidance mechanisms are no longer sufficient to provide good service under all circumstances. For this reason, additional mechanisms are needed in the routers to complement said end-to-end congestion avoidance mechanisms. For routers, one possible approach is to detect flows that are unresponsive to congestion notifications, and to reduce service levels for these flows when a congestion occurs. In this connection, unresponsive applications are "punished" and forced to comply when a congestion is notified. The challenge is to develop efficient, low-overhead algorithms that detect unresponsive flows. For this object, no perfect solutions have yet been developed.

Moreover, most end-to-end congestion detection and control mechanisms require a round-trip timer to detect packet loss, which is a problem in itself. Due to the often high variance in round-trip time, the timer is usually set too low or too high, thereby causing unneeded packet retransmission or poor throughput, respectively. Its inaccuracy leads to incorrect end-to-end judgements of current levels of congestion based on packet loss. Besides, a round-trip timer is computationally expensive to implement.

The ultimate object of any congestion detection and control scheme is to reduce network load to a sustainable value. Simplistic schemes such as Source Quench only inform a data source of the existence of congestion within the network; no other information can be deduced. Protocols such as DECbit are an improvement of Source Quench in terms of their detection of congestion and the return of this information to the sources. However, again, only the existence of congestion is returned to the sources. Schemes like RED, while admirable in attempting to address the problems of end-to-end congestion control, can only indicate congestion by dropping packets, which should not be discarded unless absolutely necessary.

In general, congestion control schemes in which network components such as routers are involved are supposed to be more effective than pure end-to-end congestion control schemes. As most network congestion occurs in routers, they are in an ideal position to monitor network load and congestion and to use this information in a congestion detection and control scheme. Thereby, network-based congestion detection and control schemes are able to feedback congestion data to the transmitting media sources, thus directly altering their behavior. Alternatively, network-based schemes can change the packet processing within routers. This can help alleviate congestion, and may also indirectly affect the behavior of media sources.

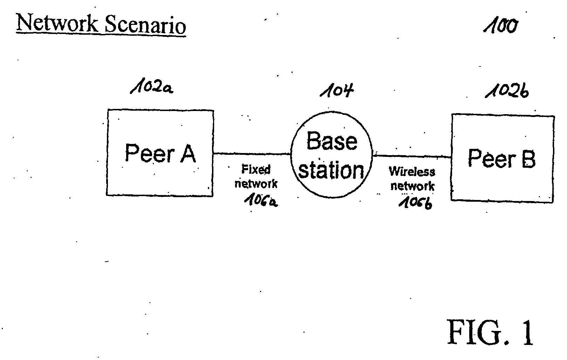

In Fig. 1, the network scenario 100 is depicted to which the proposed solution according to the underlying invention applies. Thereby, a fixed node A (the media source 102a) is situated somewhere in a fixed network 106a (e.g. in the Internet); the mobile node B (the data sink 102b) is attached to said fixed network 106a over a wireless mobile network 106b (e.g. via GPRS). In this scenario, an IP packet which is sent from the source 102a to the sink 102b is conveyed by a number of fixed network links and routers, until it reaches the router between the fixed network 106a and the wireless network 106b - the base station 104. From there, it is conveyed to the mobile node B via a wireless link.

In the following, the focus shall be on UDP traffic, especially on multimedia streams using RTP on the basis of UDP.

The scenario 100 described above is a typical scenario for mobile multimedia applications such as Video-on-Demand (VoD). Thereby, the client located on peer B is accessing multimedia data which are available at peer A. In such a scenario, multimedia streams are traversing the fixed network 106a and the mobile network 106b from peer A to peer B. Therefore, peer A is called the source 102a and peer B the sink 102b of such a multimedia stream.

The problem to be solved in this context is to detect network congestion in the described scenario 100. Congestion detection 206 is needed for a lot of issues, in particular
- for a detection of the available bandwidth or bottleneck bandwidth for algorithms that try to measure link characteristics such as the available bandwidth or the bottleneck bandwidth of a link, and
- for a network adaptation on application level, by which applications are enabled to transform their data depending on the current conditions of the underlying networks 106a+b (especially real-time video applications that reduce their frame rates when a congestion occurs).

It is always difficult to detect the congestions of an IP stream if the stream traverses wire-bound networks 106a and wireless networks 106b. This is the case since presently available congestion detection mechanisms according to the state of the art are based on measurements of packet loss or delay variation, and wireless networks solutions (e.g. GPRS) introduce high packet loss and varying latencies without being actually congested. Therefore, the employed mechanisms can not distinguish if the measured values are due to network congestion or due to the characteristics of the applied wireless network 106b. For this reason, conventional congestion detection mechanisms do not work well in the described scenario 100.

By contrast, the proposed solution according to the underlying invention is based on a congestion detection 206 by observing packet delays. The basic issue here is to analyze whether there is a "sudden increase" in the sequence of observed packet delays from the source 102a to the sink 102b. This approach is quite similar to the observation of packet inter-arrival times, which has been discussed in "Estimating the Available Bandwidth for Real-Time Traffic over Best-Effort Networks" (in: W. Dabbous and C. Diot (editors), "Proceedings of the 5^{th} Workshop on Protocols for High-Speed Networks", Sophia Antipolis, France, 1996, Chapman & Hall, pp. 3-12) by F. Davoli, O. Khan, and P. Maryni. The problem with the inter-arrival times is that the packet sequence in mobile networks and internetworks can be severely distorted. The herein proposed solution is partly solving this issue as it allows performing a congestion detection 206 separately on the fixed part 106a and the wireless part 106b of the route.

### OBJECT OF THE UNDERLYING INVENTION

In view of the above explanations, it is the object of the invention to propose a method for congestion detection and network management in heterogeneous communication networks supporting Distributed Multimedia Systems (DMSs), applications and technologies with high-speed access to dynamically adapt to varying resource availability.

This object is achieved by means of the features of the independent claims. Advantageous features are defined in the dependent claims. Further objects and advantages of the invention are apparent in the following detailed description.

### SUMMARY OF THE INVENTION

The proposed solution according to the underlying invention is basically dedicated to a method for detecting network congestions in fixed networks based on the Internet Protocol (IP), especially for multimedia streams of applications using RTP packets carried by UDP packets, targeting to support distributed multimedia applications to dynamically adapt to varying resource availability. This method is based on adding time stamps to the IP packets and performing the congestion detection based on the observation of packet delays.

### BRIEF DESCRIPTION OF THE CLAIMS

The independent claim 1 and the dependent claims 2 to 9 are directed to methods used for the detection, analysis and/or adaptive control of network congestions along the communication path used for continuous media streams transmitted between two peers in a (heterogeneous) network environment with distributed adaptive multimedia applications and services being able to dynamically adapt to varying resource availability by evaluating time differences of two or more time stamps added to each data packet of said media streams.

Thereby, said network environment comprises at least one base station serving as a router for the communication link between said peers, at least one connectionless and packet-switched wire-bound datagram network for the transmission of said data packets between the first peer, which serves as a media source, and said base station, and at least one wireless network for the transmission of said data packets between said base station and the second peer, which serves as a media sink. In this connection, said time stamps are added to said data packets by the first peer and/or the base station and evaluated by the second peer in order to observe the packet delay said data packets encounter on the path through the wire-bound datagram network between the first peer and the base station for getting a qualitative status information of said wire-bound datagram network.

The independent claim 10 pertains to a mobile terminal configured for performing a method according to claim 1 to 4.

Moreover, the independent claims 12 and claim 11 refer to a base station and a scheduler framework implemented in said base station which serves as an active node for enabling an adaptive allocation of bandwidth and/or an adaptive scheduling of data packets to be transmitted through said wire-bound datagram network depending on the current congestion state of said network by applying a method according to anyone of the claims 1 to 9.

Finally, the independent claims 13 and 14 pertain to a software program and an extension of a communication protocol providing a guaranteed end-to-end quality for a telecommunication session between two peers that realize a method according to anyone of the claims 1 to 9 when executed by the central processing unit of the second peer.

### BRIEF DESCRIPTION OF THE DRAWINGS

Further advantages and possible applications of the underlying invention result from the subordinate claims as well as from the following description of the preferred embodiment of the invention which is depicted in the following drawings. Herein,
- Fig. 1: outlines a network scenario consisting of a first node A (the media source), which is situated somewhere in a fixed network (e.g. in the Internet), and a second node B (the data sink), which is attached to said fixed network over a wireless mobile network (e.g. via GPRS),
- Fig. 2: presents an example scenario showing the transmission of a continuous media stream to be transmitted from peer A to peer B by means of UDP packets,
- Fig. 3: presents an example scenario showing the transmission of a continuous media stream to be transmitted from peer A to peer B by means of RTP packets,
- Fig. 4: depicts the structure of the employed RTP header,
- Fig. 5: depicts the structure of the employed IP header, and
- Fig. 6: illustrates the structure of the Internet time stamp option field.

### DETAILED DESCRIPTION OF THE UNDERLYING INVENTION

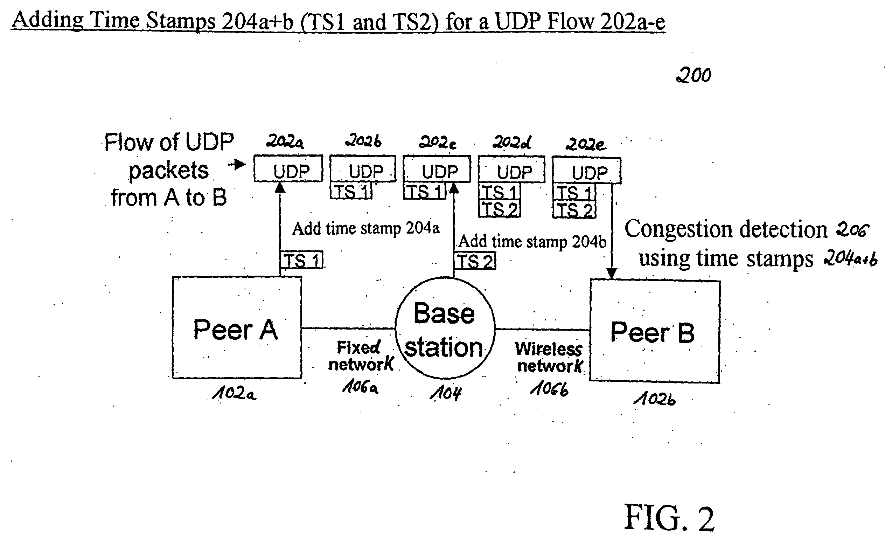

In the following, the preferred embodiment of the underlying invention as depicted in Figs. 2 to 6 shall be explained in detail. The meaning of the symbols designated with reference signs in Figs. 1 to 6 can be taken from Table 4.

For simplicity, the following assumptions shall be made in the next sections:
1. For the moment, only unicast services are considered. In multicast services and point-to-multipoint services, rate control must be treated differently than in unicast services because every change on a sender 102a always affects a whole group of clients 102b.
2.If DiffServ or similar techniques are applied, all packets 202a-e and/or 302a-e in one flow are assumed to be in the same traffic class. This assumption is necessary for any kind of congestion detection 206 based on transport delays. Otherwise, routers would differently treat packets belonging to different classes - i.e. by different router queues -, and the transport delays would be not comparable.
3. For the same reason, the packets 202a-e and/or 302a-e should be smaller than the Path Maximum Transmission Unit (PMTU) to avoid transparent fragmentation, which would lead to fragmentation times and to different packet sizes.
4.Any bit errors in UDP datagrams 202a-e shall be ignored: Thereby, UDP datagrams 202a-e must not be discarded, no matter whether the Service Data Unit (SDU) is corrupt or not. Any error handling is strongly due to the application. Moreover, there is no automatic retransmission at all.
5. It shall be assumed that the route from the fixed node 102a to the mobile node 102b and vice versa will not change for a reasonable amount of time.

In the context of the underlying invention, the network architecture of the wire-bound network 106a features the following characteristics:
- The network 106a is a wide-area network with nodes in the network passing data to other nodes along links. The nodes are arbitrarily connected; the network 106a does not have a particular topology (e.g. spanning tree, hypercube, etc.).
- The network 106a is connectionless. There is no reservation of network bandwidth or resources between a source of data transmission and its intended destination. End-to-end "connections" may be set up by the Transport Layers in the source and destination, but the other nodes within the network 106a are oblivious to these Transport Layer operations.

The network 106a is packet-switched. Packets 202a-e and/or 302a-e are individually routed from the source 102a to the destination 102b. They may take different routes, and may arrive at the destination 102b out-of-order.
- Variable-sized packets 202a-e and/or 302a-e are routed from one link to the next via nodes, often known as packet switches, gateways, or more commonly, routers. Routers usually buffer incoming packets 202a-e and/or 302a-e before they are transmitted on an outgoing link as described below.
- The network 106a uses semi-static routing. Routes can change slowly over time, but most routes are static.
- The network 106a sets no bandwidth constraints on data sources 102a. A source host 102a may attempt to transmit data at a rate which will exceed the bandwidth or resources on the links and nodes 104 between it and the destination host 102b.
- Links are assumed to have fixed bandwidths with no service guarantees. There is no expectation of error or flow control on any link.
- The network 106a makes no transmission guarantees. The links on the network 106a have finite bandwidth, and the nodes 104 have finite buffer space for packets 202a-e and/or 302a-e waiting to be routed. If, for any reason, network components 104 are unable to pass data on to the destination 102b, the data may be discarded. This type of network is also known as a best-effort network.
- The network 106a is an internetwork, in which nodes 102a+b and 104 are connected by links that greatly vary in type. For example, there may be large variations in the physical characteristics of the links, the Medium Access Control (MAC) mechanism of the links, the bit rate on the links, the bit error rate on the links, and the maximum packet size on the links.
- The bandwidth on each link is generally static. It usually changes only when upgrades to the network infrastructure are performed.

As depicted in Fig. 2, the main idea for the congestion detection 206 shown'in scenario 200 comprises the following steps:
1. When an IP datagram 202a-e leaves node A, the source 102a adds a first time stamp 204a (TS1) to said IP datagram 202a-e. For example, this time stamping can be done by an IP option field 600.
2.When an IP datagram 202a-e enters the router at the mobile network's base station 104, the router adds a time stamp 204b (TS2) to the IP datagram 202a-e. For example, this can be done by an IP option field 600.
3. The congestion in the "fixed-network part" 106a of the path from the source 102a to the sink 102b is then detected by the analysis of transport delays based on the difference between the time stamp 204a (TS1) at the source 102a and the time stamp 204b (TS2) added at the base station 104. The congestion detection 206 is done at the sink 102b.

In the following, the IP, UDP and RTP data flow throughout the networks 106a+b and the exact mechanism how time stamps 204a+b are added shall be described. Moreover, the detailed packet structure of IP, UDP and RTP shall be described.

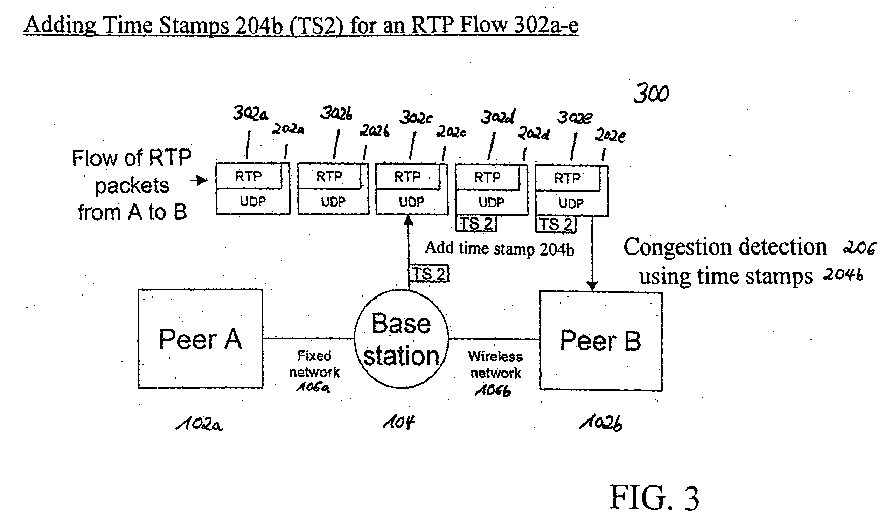

In Figs. 2 and 3, the term "UDP" always refers to UDP datagrams 202a-e that are encapsulated into an IP datagram. For simplicity, since UDP datagrams 202a-e are always encapsulated into IP datagrams, the IP datagrams are left out.

In the special case of multimedia streams using RTP packets 302a-e carried by UDP packets 202a-e as depicted in Fig. 3, the first step can be omitted since RTP packets 302a-e are already marked with a time stamp 204a (TS1) by the sender 102a. Therefore, if this mechanism is only applied for RTP streams 302a-e, there is no need to make any changes to the source 102a.

The same applies to any other protocols that add time stamps 204a (TS1) at the source 102a. RTP is mentioned here because it is a proposed Internet standard and widely used in the Internet as described in "RTP: A Transport Protocol for Real-Time Applications" (IETF Request for Comments (RFC) 1889 (proposed standard), Internet Engineering Task Force, Jan. 1996) by H. Schulzrinne, S. Casner, R. Frederick, and V. Jacobson.

With these time stamps 204a (TS1), it is then possible to observe the delay a packet encounters on the path through the fixed network 106a from the source 102a to the base station 104. The observation of the packet delay in this "fixed-network part" 106a of the path from the source 102a to the sink 102b can be used for a qualitative network status information of the path 106a from the source 102a to base station 104, e.g. for an estimation whether the fixed network 106a is currently congested or not.

Such a congestion detection 206 is performed by using the same algorithms as used by the inter-arrival time approaches, however, it is now based on the measured packet delays on the fixed network 106a, and the wireless network 106b can be measured separately. Therefore, the congestion detection 206 can work on the "fixed-network part" 106a without taking the (problematic) "wireless-network part" 106b into account. The network status and the available bandwidth on the other part of the path from the base station 104 to the sink 102b is often determined by negotiation between the sink 102b and the network operator.

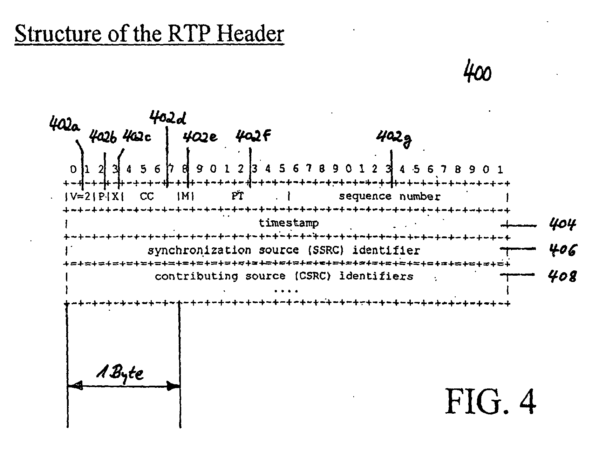

Time stamps 204a+b are only added to IP packets. There is no need to add any time stamps in RTP packets 302a-e, because RTP datagrams 302a-e contain a time stamp 204a by definition. Said RTP datagrams consist of a header 400 followed by the RTP payload. The structure of the RTP header 400 can be taken from Fig. 4.

Each sender of an RTP datagram 302a-e is obliged to fill in the time-stamp 204a into the respective RTP packet 302a-e as prescribed by the specification of RTP.

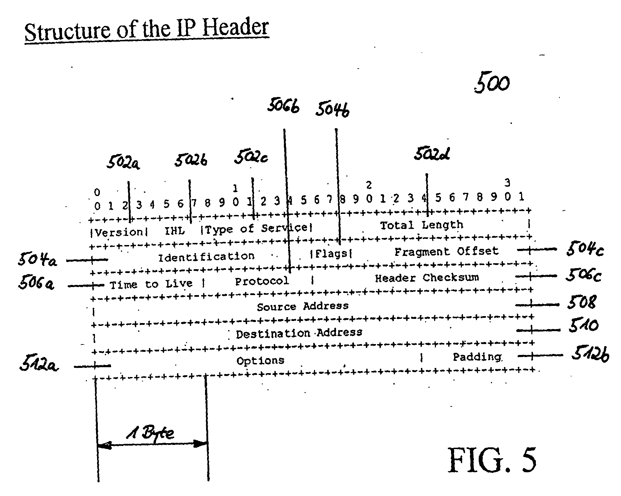

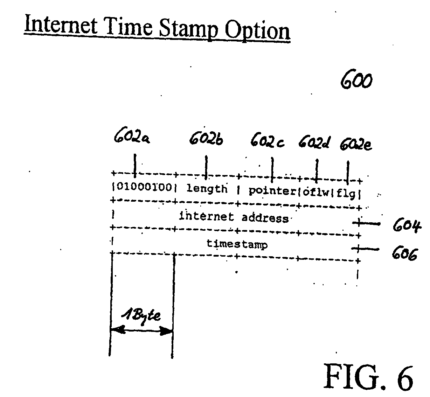

Adding time stamps 204a+b to IP datagrams is achieved by the Internet Time Stamp Option 600, which is defined within the specification of an IP datagram. Said IP datagrams consist of an IP header 500 as shown in Fig. 5 including the IP options followed by the IP payload. Thereby, options may or may not appear in the IP header 500. In the method presented in the scope of the underlying invention, the Internet Time Stamp Option 600 as depicted in Fig. 6 is used to fill in time stamps.

The first eight bit, given by the field 602a, identify the option 600. The length field 602b contains the length of the whole table, which must be less or equal than 40 Byte. The pointer field 602c points to the next unused time stamp 204a/b. The oflw field 602d is originally set to zero and is incremented by each host, which wants to fill in a time stamp 204a/b but fails to do so due to an already filled list. The flags (flg) field 602e defines whether
- time stamps 204a/b are added by any node said data packet's 202a-e have passed (flg = 0),
- time stamps 204a/b and IP addresses of passed nodes are filled in (flg = 1), or
- time stamps 204a/b may only be filled in by "hosts of interest", i.e. hosts whose IP addresses are already filled into the list (flg = 3).

For the purpose of the underlying invention, usually flg = 1 will be sufficient to get the router of the base station 104 fill in its time stamp 204b as mentioned above. If the path from the source 102a to the sink 102b is too long, said router must be defined as "host of interest", i.e. the flg field 602e is set to "3" and the IP address of said router is filled into the aforementioned option 600.

Most of the Internet traffic does not have the IP Time Stamp Option 600 set. For the purpose of the herewith presented invention, two cases have to be distinguished:
- IP datagrams have the IP Time Stamp Option 600 set by the source 102a. In this case, it must be ensured that there is room for the router of the base station 104 to insert its time stamp 204b into the option 600. For this reason, the IP Time Stamp Option 600 can be set to its initial state.
- IP datagrams have not set the IP Time Stamp Option 600 by the source 102a. In this case, the IP time stamp option 600 must be inserted.

Both operations have to be executed by the router of the base station 104 which is passed by the traffic discussed above. In particular, since sent IP datagrams are modified by the router, it is crucial that whole IP datagrams are accessible on this router, even if they have been split up into fragments on their way from the source 102a to the sink 102b. In other words: The router which modifies an IP datagram must defragment the whole packet. Therefore, it must be passed by all fragments belonging to the IP datagram to be modified. In the fourth version of the Internet Protocol (IPv4), the existence of an appropriate router for this task is guaranteed due to the use of mobile IP. All packets that have to be delivered to a mobile terminal 102b are delivered by a so-called "foreign agent", which is situated on the IP network 106a visited by the mobile terminal 102b. Thereby, the "foreign agent" is a software entity which is used in Mobile IP and must be available on a node 104 in the visited network 106a. This node 104 is passed by all packets 202a-e directed to the mobile terminal 102b. Hence, said node 104 must be well suited for the proposed mechanism. In the sixth version of the Internet Protocol (IPv6), fragmentation only takes place at the sender 102a; there is no transparent fragmentation on the path. In this case, it is sufficient to disallow fragmentation of traffic to mobile nodes 102b in general. This is possible, since in IP version 6 the sender 102a knows about the Maximum Transmission Unit (MTU) available on the path. Consequently, fragmentation can be avoided by passing appropriate maximum packet sizes or maximum segment sizes to the upper layers. In fact, this approach is considered preferable to fragmentation because it causes less overhead than fragmentation and defragmentation. Today, the general tendency in the Internet community is to totally avoid fragmentation of IP datagrams.

Nevertheless, if the insertion of the IP Time Stamp Option, 600 causes the packet to exceed the MTU and thus fragmentation becomes necessary, this is done at the aforementioned router. In this case, the IP Time Stamp Option 600 is only present in the first fragment, as specified in the IP specification. Hence, it is guaranteed that there is only one unique IP Time Stamp Option field 600 present in the IP packet arriving at the mobile terminal 102b. Another fragmentation problem can arise if the overall size of the IP datagram exceeds the MTU. In this case, the solution in IPv4 is doing defragmentation in the router that is passed by the traffic.

In the mobile terminal 102b, an IP datagram is decapsulated by the network layer and handed over to the upper layers. Normally, the IP header, which includes the IP time stamp 204a/b, is not handed over to the upper layers. One approach to solve this problem is to modify the operating system's kernel in such a way that the network layer passes IP time stamps 204a/b together with the payload to the socket interface, e.g. by adding a modified socket function call.

The main difference between the invention and the state of the art is to add additional time stamps 204a+b (TS1 and TS2) at the source 102a and at the base station 104, respectively, and to use these at the sink 102b for a congestion detection 206 of the route through the fixed network 106a between the source 102a and the base station 104. The additional new aspect is to take the RTP time stamp information 204b (TS2) for a congestion detection 206 into account.
- The described approach is more robust than the existing ones due to the additional time stamp 204a (TS1) at the source 102a. Other approaches only measure the difference in the inter-arrival times of the packets 202a-e at the sink 102b. They assume that the packets 202a-e were sent equally distributed over time. The described approach does not need such assumptions as the real time the packets need for the transmission can be measured by using the time stamps 204a+b (TS1 and TS2).
- The described approach can take specific RTP (time stamp) characteristics into account.
- The presented approach performs a congestion detection 206 at the sink 102b. In general, said congestion detection 206 is done at the source 102a. Performing said congestion detection 206 at the sink 102b has the following advantages:
   - Only the simplex flow from A to B is considered. The congestion detection 206 is independent from the properties of the flow from B to A. This avoids problems which are encountered in classical congestion control schemes when they are used in networks with asymmetrical bandwidth, e.g. in networks applying the Universal Mobile Telecommunications System (UMTS).
   - Making flow adaptation decisions at the sink 102b means that they are made on the client. As only the mobile client holds the information, which flows are active, whether all flows are to be treated equally or whether there are priorities, only the client is allowed to make adaptation decisions that match the requirements defined by the QoS management.
   - Although flow interdependencies, e.g. shared links on a path, are generally not known to the client, some interdependencies can be derived from congestion observations 206. For example, if the increase of a flow rate results in a congestion only on this flow, it is a valid conclusion that no other active flow on the client shares the bottleneck link with the congested flow, because congestion always affects all flows on a link and not only one.
- The approach of introducing time stamps 204b (TS2) at the router of the base station 104 is completely protocol-independent and does not require any kind of flow state information on the router, which is the case in some split connection approaches.
- Considering transport times is sometimes critical owing to the unknown resolutions of clocks that are applied to routers. The intended approach uses the RTP time stamp 204a (TS1) on the RTP source 102a. The resolution of the RTP synchronization source is defined by the application and can thus be considered to be sufficient. Hence, only the clock at the router of the base station 104 is required to have a sufficient resolution to detect changes in transport delays. In addition, because only the slope of the delays and no absolute values are considered, there is no necessity for any clock synchronization.
- A difference between the presented approach and other approaches is that usually the round-trip time or the jitter between different RTCP receiver reports is taken into account. All these approaches consider end-to-end transport times, in case of RTP even twice. As a consequence, all these approaches suffer from unpredictable latencies on the wireless link. As only the "fixed-network part" 106a is taken into account for a congestion detection 206, whereas the part of the wireless link 106b is managed by management information provided by the applied wireless link technology, this approach is robust against any unpredictable characteristics and behaviour of wireless networks 106b.

**Table 1: Comparison to Related Pior Art**

| Technologies | Comment |
|---|---|
| Inter-Arrival Times, Jitter, Observation | The hereby presented technique is needed to observe delays. In general, inter-arrival times are sensitive to packet order distortion and to packet loss as well since inter-arrival times are measured between subsequent packets. |
| AIMD Stream Adaptation | The related work focuses on rate control schemes. Congestion control schemes are taken for granted. |
| MTCP | MTCP focuses on the loss detection in TCP, which is based on time-out observation. It interferes with the acknowledge (ACK) mechanism of the Transmission Control Protocol (TCP) to alleviate faulty loss observation as a result of undue high latencies, which are often encountered in wireless networks. The approach will only work with TCP. |
| M-TCP, M-RTP | M-TCP is similar to MTCP, although the ACK manipulation is done with a different mechanism. Nevertheless, the mechanism is still restricted to TCP. M-RTP is focused on the evaluation of congestion and appropriate RTCP semantics. Nevertheless, M-RTP does not deal with congestion detection. |
| I-TCP | I-TCP is a circuit relay approach that is designed for TCP to alleviate problems due to the end-to-end mechanisms in TCP in conjunction with wireless networks. |

**Table 2: Terminology**

| Term | Definition |
|---|---|
| Connection | Semi-permanent relationship between two nodes in a network; within the context of said relationship, data can be exchanged in an exclusive and controlled manner. |
| Source | A place from which data is taken. |
| Sink | A place where data is moved to from a source. |
| Service Data Unit | In layered systems, a set of data that is sent by a user of the services of a given layer, and is transmitted to a peer service user without being changed semantically. |
| MTU | Short for Maximum Transmission Unit, the largest physical packet size, measured in bytes, that a network can transmit. Any messages larger than the MTU are divided into smaller packets before being sent. |

**Table 3: Abbreviations**

| Abbr. | Explanation |
|---|---|
| GPRS | General Packet Switched Radio |
| IETF | Internet Engineering Task Force |
| IP | Internet Protocol |
| MTU | Maximum Transmission Unit |
| RTP | Real-Time Transport Protocol |
| SDU | Service Data Unit |
| UDP | User Datagram Protocol |
| UMTS | Universal Mobile Telecommunication System |

## Claims

1. A method for the detection (206), analysis and/or adaptive control of network congestions along the communication path used for media streams transmitted between a first peer (102a) serving as a media source and a second peer (102b) serving as a media sink, said network (106a-b) comprising at least one base station (104) serving as a router for the communication link between the peers (102a-b),
wherein the second peer (102b) evaluates time differences of at least two time stamps (204a-b) added to each data packet (202a-e) of said media streams, **characterized by** following steps:
- a first time stamp (204a) is,added to the data packets (202a-e) at the first peer (102a),
- the data packets (202a-e) are transmitted between the first peer (102a) and the base station (104) through at least one connectionless and packet-switched wire-bound datagram, network (106a),
- the base station (104) adds a second time stamp (204b) to the data packets (202a-e),
- the data packets (202a-e) are transmitted between the base station (104) and the second peer (102b) through at least one wireless network (106b), and
- the second peer (102b) evaluates said time stamps (204a-b) in order to observe the packet delay said data packets (202a-e) encounter on the path through the datagram network (106a) between the first peer (102a) and the base station (104).

2. A method according to claim 1,
**characterized in that**
the first peer (102a) adds the first time stamp (204a) to the data packets (202a-e).

3. A method according to claim 1 or 2,
**characterized in that**
the protocol used by the media streams adds the first time stamp (204a) to the data packets (202a-e).

4. A method according to anyone of the claims 1 to 3,
**characterized in that**
the second peer (102b) performs a node-to-node congestion detection (206), analysis and/or adaptive control for the communication path between the first peer (102a) and the base station (104) through the connectionless and packet-switched wire-bound datagram network (106a) by calculating said time differences and/or performing an adaptive packet scheduling based on the status information of said network.

5. A method according to anyone of the claims 1 to 4,
**characterized by**
supporting different access technologies in dynamic wire-bound and/or wireless networks based on congestion control mechanisms according to the Transmission Control Protocol, TCP, and/or the Internet Protocol, IP, thereby relying on the end-to-end Real-Time Transport Protocol, RTP, and/or the User Datagram Protocol, UDP, for feedback information on the current network status with regard to the respective communication path.

6. A method according to anyone of the claims 1 to 5,
**characterized in that**
said congestion detection (206), analysis and/or adaptive control mechanisms are applied to multicast traffic.

7. A method according to anyone of the claims 5 and 6,
**characterized in that**
in case IP datagrams are transmitted, the Internet Time Stamp Option (600) fields of the IP headers (500) are used to fill in said time stamps (204a-b).

8. A method according to anyone of the claims 5 and 6,
**characterized in that**
in case RTP datagrams (302a-e) are transmitted via UDP, the time stamp fields (404) of the RTP headers (400), which have to be filled out by the first peer (102a) according to the specification of RTP, are taken into account for the congestion detection (206) on the path through the wire-bound datagram network (106a) between the first peer (102a) and the base station (104) by the second peer (102b).

9. A method according to anyone of the claims 1 to 8,
**characterized in that**
the network status and the available bandwidth on the other part of the path through the mobile network (106b) between the base station (104) and the second peer (102b) is determined by negotiation between the second peer (102b) and the network operator.

10. A mobile terminal configured for performing a method according to claims 1 to 4.

11. A scheduler framework of a base station (104) serving as an active node for enabling an adaptive allocation of bandwidth arid/or an adaptive scheduling of data packets (202a-e) to be transmitted through at least one connectionless and packet-switched wire-bound network (106a) depending on the current congestion state of said network (106) by applying a method according to anyone of the claims 1 to 9.

12. A base station configured for implementing a method according to anyone of the claims 1 to 9.

13. A software program implementing a method according to anyone of the claims 1 to 9 when executed by a processing unit (102b).

14. An extension of a communication protocol providing a guaranteed end-to-end quality for a telecommunication session between two peers (102a-b) by performing a method according to anyone of the claims 1 to 9.

## Patentansprüche

1. Verfahren zur Ermittlung (206), Analyse und/oder adaptiven Steuerung von Netzwerk-Verstopfungen bzw. -Blockierungen längs des Kommunikationspfades, der für Medienströme genutzt wird, die zwischen einem ersten Kommunikationspartner bzw. Peer (102a), der als Medien-Quelle dient, und einem zweiten Kommunikationspartner bzw. Peer (102b) übertragen werden, der als Medien-Senke dient,
wobei das betreffende Netzwerk (106a-b) zumindest eine Basisstation (104) umfasst, die als Router für die Kommunikationsverbindung zwischen den Kommunikationspartnern (102a-b) dient,
und wobei der zweite Kommunikationspartner (102b) Zeitdifferenzen von zumindest zwei Zeitstempeln (204a-b) bewertet, die jedem Datenpaket (202a-e) der genannten Medienströme hinzugefügt sind,
**gekennzeichnet durch** folgende Schritte:
- ein erster Zeitstempel (204a) wird den Datenpaketen (202a-e) bei dem ersten Kommunikationspartner (102a) hinzugefügt,
- die Datenpakete (202a-e) werden zwischen dem ersten Kommunikationspartner (102a) und der Basisstation (104) über zumindest ein verbindungsloses und paketvermittelndes leitungsgebundenes Datenpaket-Netzwerk (106a) übertragen,
- die Basisstation (104) fügt einen zweiten Zeitstempel (204b) zu den Datenpaketen (202a-e) hinzu,
- die Datenpakete (202a-e) werden zwischen der Basisstation (104) und dem zweiten Kommunikationspartner (102b) über zumindest ein drahtloses Netzwerk (106b) übertragen, und
- der zweite Kommunikationspartner (102b) bewertet die Zeitstempel (204a-b), um die Paketverzögerung zu überwachen, welcher die betreffenden Datenpakete (202a-e) auf dem Pfad durch das Datenpaket-Netzwerk (106a) zwischen dem ersten Kommunikationspartner (102a) und der Basisstation (104) ausgesetzt sind.

2. Verfahren nach Anspruch 1, **dadurch gekennzeichnet, dass** der erste Kommunikationspartner (102a) den Datenpaketen (202a-e) den ersten Zeitstempel (204a) hinzufügt.

3. Verfahren nach Anspruch 1 oder 2, **dadurch gekennzeichnet, dass** das durch die Medienströme benutzte Protokoll den Datenpaketen (202a-e) den ersten Zeitstempel (204a) hinzufügt.

4. Verfahren nach einem der Ansprüche 1 bis 3, **dadurch gekennzeichnet, dass** der zweite Kommunikationspartner (102b) eine Knoten-zu-Knoten-Verstopfungs-Ermittlung (206), -Analyse und/oder adaptive -Steuerung für den Kommunikationspfad zwischen dem ersten Kommunikationspartner (102a) und der Basisstation (104) über das verbindungslose und paketvermittelnde leitungsgebundene Datenpaket-Netzwerk (106a) dadurch ausführt, dass die betreffenden Zeitdifferenzen berechnet werden und/oder dass eine adaptive Paket-Festlegung auf der Grundlage der Statusinformation des genannten Netzwerks ausgeführt wird.

5. Verfahren nach einem der Ansprüche 1 bis 4, **gekennzeichnet durch** eine Unterstützung unterschiedlicher Zugriffstechnologien in dynamischen leitungsgebundenen und/oder leitungslosen Netzwerken auf der Grundlage von Verstopfungs-Steuerungsmechanismen entsprechend dem Übertragungs-Steuerungsprotokoll TCP und/oder dem Internet-Protokoll IP, um sich **dadurch** auf das Strecken- bzw. Verbindungs-Echtzeit-Transportprotokoll RTP und/oder auf das Benutzer-Datenpaket-Protokoll UPD zur Rückkopplung einer Information bezüglich des gegenwärtigen Netzwerk-Status im Hinblick auf den betreffenden Kommunikationspfad abzustützen.

6. Verfahren nach einem der Ansprüche 1 bis 5, **dadurch gekennzeichnet, dass** die genannten Verstopfungs-Ermittlungs-(206), -Analyse- und/oder adaptiven -Steuerungsmechanismen auf einen Gruppensendungsverkehr angewandt werden.

7. Verfahren nach einem der Ansprüche 5 und 6, **dadurch gekennzeichnet, dass** im Falle der Übertragung von IP-Datenpaketen die Internet-Zeitstempel-Optionsfelder (600) der IP-Header (500) dazu genutzt werden, mit den genannten Zeitstempeln (204a-b) gefüllt zu werden.

8. Verfahren nach einem der Ansprüche 5 und 6, **dadurch gekennzeichnet, dass** im Falle der Übertragung von RTP-Datenpaketen (302a-e) mittels UDP die Zeitstempelfelder (404) der RTP-Header (400), welche durch den ersten Kommunikationspartner (102a) gemäß der Spezifikation von RTP zu füllen sind, für die Verstopfungs-Ermittlung (206) auf dem Pfad über das leitungsgebundene Datenpaket-Netzwerk (106a) zwischen dem ersten Kommunikationspartner (102a) und der Basisstation (104) von dem zweiten Kommunikationspartner (102b) berücksichtigt werden.

9. Verfahren nach einem der Ansprüche 1 bis 8, **dadurch gekennzeichnet, dass** der Netzwerk-Status und die verfügbare Bandbreite im anderen Teil des Pfades über das mobile Netzwerk (106b) zwischen der Basisstation (104) und dem zweiten Kommunikationspartner (102b) durch Verhandlung zwischen dem zweiten Kommunikationspartner (102b) und dem Netzwerk-Operator festgelegt werden.

10. Mobiles Endgerät, welches zur Durchführung eines Verfahrens gemäß den Ansprüchen 1 bis 4 konfiguriert ist.

11. Ablaufsteuerungssystem einer Basisstation (104), die als aktiver Knoten zur Ermöglichung einer adaptiven Zuweisung von Bandbreite und/oder zu einer adaptiven Festsetzung von über zumindest ein verbindungsloses und paketvermittelndes leitungsgebundenes Netzwerk (106a) zu übertragenden Datenpaketen (202a-e) in Abhängigkeit vom gegenwärtigen Verstopfungs- bzw. Blockierungszustand des betreffenden Netzwerks (106) durch Anwendung eines Verfahrens gemäß einem der Ansprüche 1 bis 9 dient.

12. Basisstation, die zur Implementierung eines Verfahrens gemäß einem der Ansprüche 1 bis 9 konfiguriert ist.

13. Software-Programm, welches ein Verfahren gemäß einem der Ansprüche 1 bis 9 implementiert, wenn es durch eine Verarbeitungseinheit (102b) ausgeführt wird.

14. Erweiterung eines Kommunikationsprotokolls, welches eine garantierte Verbindungsqualität für eine Kommunikationssitzung zwischen zwei Kommunikationspartnern (102a-b) dadurch bereitstellt, dass ein Verfahren nach einem der Ansprüche 1 bis 9 ausgeführt wird.

## Revendications

1. Procédé pour la détection (206), l'analyse et/ou la commande adaptative de congestions d'un réseau le long du trajet de communication utilisé pour des flux de média transmis entre un premier poste (102a) utilisé comme source de média et un second poste (102b) utilisé comme récepteur de média, ledit réseau (106a-b) comprenant au moins une station de base (104) servant de routeur pour le lien de communication entre les postes (102a-b), selon lequel le second poste (102b) évalue des différences de temps d'au moins deux marques temporelles (204a-b) ajoutées à chaque paquet de données (202a-e) desdits flux de média,
**caractérisé par** les étapes suivantes:
- une première marque temporelle (204a) est ajoutée au paquet de données (202a-e) dans le premier poste (102a),
- des paquets de données (202a-e) sont transmis entre le premier poste (102a) et la station de base (104) par l'intermédiaire d'au moins un réseau de datagrammes (106a) sans connexion, lié à un fil et à commutation de paquets,
- la station de base (104) ajoute une seconde marque temporelle (204b) au paquet de données (202a-e),
- des paquets de données (202a-e) sont transmis entre la station de base (104) et le second poste (102b) par l'intermédiaire d'au moins un réseau sans fil (106b), et
- le second poste (102b) évalue lesdites marques temporelles (204a-b) pour observer le retard des paquets de données (202a-e), que lesdits paquets de données (202a-e) rencontrent sur le trajet passant par le réseau de datagrammes (106a) entre le premier poste (102a) et la station de base (104).

2. Procédé selon la revendication 1, **caractérisé en ce que**
le premier poste (102a) ajoute la première marque temporelle (204a) aux paquets de données (202a-e).

3. Procédé selon la revendication 1 ou 2,
**caractérisé en ce que**
le protocole utilisé par les flux de média ajoute la première marque temporelle (204a) aux paquets de données (202a-e).

4. Procédé selon l'une quelconque des revendications 1 à 3, **caractérisé en ce que**
le second poste (102b) exécute une détection (206) de congestion noeud à noeud, une analyse et/ou une commande adaptative pour le trajet de communication entre le premier poste (102b) et l'installation de base (104) par l'intermédiaire du réseau de datagrammes (106a) sans connexion, lié à un fil et à commutation de paquets, par calcul desdites différences de temps et/ou exécution d'une programmation adaptative de paquets sur la base de l'information d'état dudit réseau.

5. Procédé selon l'une quelconque des revendications 1 à 4, **caractérisé par**
le support de différentes technologies d'accès dans des réseaux dynamiques liés à un fil et/ou sans fil sur la base de mécanismes de commande de congestion conformément au protocole de commande de transmission TCP et/ou au protocole Internet IPF, ce qui permet une transmission avec le protocole de transport en temps réel RTP d'une extrémité à l'autre et/ou le protocole de datagrammes d'utilisateur UDP pour une information de renvoi concernant l'état actuel du réseau en rapport avec le trajet respectif de communication.

6. Procédé selon l'une quelconque des revendications 1 à 5, **caractérisé en ce que**
les mécanismes de détection de congestion (206), d'analyse et/ou de commande adaptative sont appliqués à un trafic sur trajets multiples.

7. Procédé selon l'une quelconque des revendications 5 et 6, **caractérisé en ce que**
dans le cas où des datagrammes IP sont transmis, une zone d'option de marque temporelle Internet (600) des en-têtes IP (500) sont utilisés pour remplir lesdites marques temporelles (204a-b).

8. Procédé selon l'une quelconque des revendications 5 et 6, **caractérisé en ce que**
dans le cas où des datagrammes RTP (302a-e) sont transmis par l'intermédiaire du protocole UDP, les zones de marques temporelles (404) des en-têtes RTP (400) qui ont été remplies par le premier poste (102a) conformément à la spécification de RTP, sont pris en compte pour la détection de congestion (206) sur le trajet traversant le réseau de datagrammes (106a), lié à un fil, entre le premier poste (102a) et la station de base (104) par le second poste (102b) .

9. Procédé selon l'une quelconque des revendications 1 à 8, **caractérisé en ce que**
l'état du réseau et la largeur de bande disponible dans l'autre partie du trajet passant par le réseau mobile (106b) entre la station de base (104) et le second poste (102b) sont déterminés par négociation entre le second poste (102b) et l'opérateur du réseau.

10. Terminal mobile agencé pour exécuter un procédé selon les revendications 1 à 4.

11. Structure de programmateur d'un poste de base (104) utilisé comme noeud actif pour permettre l'affectation adaptative d'une largeur de bande et/ou une programmation adaptative de paquets de données (202a-e) devant être transmis par le au moins un réseau (106a) sans connexion, à commutation de paquets et lié à un fil, en fonction de l'état actuel de congestion dudit réseau (106) par application d'un procédé selon l'une quelconque des revendications 1 à 9.

12. Station de base configurée de manière à mettre en avant le procédé selon l'une quelconque des revendications 1 à 9.

13. Programme logiciel mettant en oeuvre le procédé selon l'une quelconque des revendications 1 à 9, lorsqu'il est exécuté par une unité de traitement (102b).

14. Extension d'un protocole de communication fournissant une qualité garantie d'une extrémité à l'autre pour une session de télécommunication entre deux postes (102a-b) moyennant l'exécution d'un procédé selon l'une quelconque des revendications 1 à 9.
